(19) Europäisches Patentamt / European Patent Office / Office européen des brevets

(11) **EP 4 162 789 B1**

(12) **EUROPÄISCHE PATENTSCHRIFT**

(45) Veröffentlichungstag und Bekanntmachung des Hinweises auf die Patenterteilung:
**02.04.2025   Patentblatt 2025/14**

(21) Anmeldenummer: **22187382.1**

(22) Anmeldetag: **28.07.2022**

(51) Internationale Patentklassifikation (IPC):
***A01D 41/14*** *(2006.01)*

(52) Gemeinsame Patentklassifikation (CPC):
**A01D 41/141; A01D 41/144; A01D 41/145**

(54) **VERFAHREN ZUM BETREIBEN EINES AN EINER AUFNAHMEVORRICHTUNG EINES SELBSTFAHRENDEN MÄHDRESCHERS ANGEORDNETEN VORSATZGERÄTES SOWIE SELBSTFAHRENDER MÄHDRESCHER MIT EINEM SEGMENTIERTEN VORSATZGERÄT**

METHOD OF OPERATING A HEADER MOUNTED ON A PICK-UP STRUCTURE OF A SELF-PROPELLED COMBINE HARVESTER AS WELL AS SELF-PROPELLED COMBINE HARVESTER WITH A SEGMENTED HEADER

MÉTHODE D'UTILISATION D'UNE TÊTE DE RÉCOLTE MONTÉ SUR UNE STRUCTURE DE FIXATION D'UNE MOISSONNEUSE-BATTEUSE AUTOMOTRICE AINSI QUE MOISSONNEUSE-BATTEUSE AUTOMOTRICE AVEC UNE TÊTE DE RÉCOLTE SEGMENTÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **05.10.2021   DE 102021125815**

(43) Veröffentlichungstag der Anmeldung:
**12.04.2023   Patentblatt 2023/15**

(73) Patentinhaber: **CLAAS Selbstfahrende Erntemaschinen GmbH**
**33428 Harsewinkel (DE)**

(72) Erfinder:
• **Füchtling, Christian**
  **48317 Drenstein Rinkerode (DE)**
• **Wielenberg, Andreas**
  **32049 Herford (DE)**
• **Beschorn, Udo**
  **33428 Harsewinkel (DE)**

(74) Vertreter: **CLAAS Gruppe**
**Mühlenwinkel 1**
**33428 Harsewinkel (DE)**

(56) Entgegenhaltungen:
EP-B1- 2 845 462          US-A1- 2021 185 917
US-A1- 2021 212 248      US-B2- 10 765 066

**Beschreibung**

Die vorliegende Erfindung betrifft ein Verfahren zum Betreiben eines an einer Aufnahmevorrichtung eines selbstfahrenden Mähdreschers angeordneten Vorsatzgerätes gemäß dem Oberbegriff des Anspruches 1. Weiterhin betrifft die vorliegende Erfindung einen selbstfahrenden Mähdrescher zur Durchführung eines solchen Verfahrens gemäß dem Anspruch 12.

Ein Vorsatzgerät, welches einen Mittenabschnitt und zwei Seitenabschnitte umfasst, die jeweils durch ein Rahmengelenk mit dem Mittenabschnitt um eine in Fahrtrichtung des Mähdreschers orientierte Schwenkachse schwenkbar verbunden sind, wobei der jeweilige Seitenabschnitt mittels eines Aktors, der von einer Steuerungsvorrichtung angesteuert wird, relativ zum Mittenabschnitt um die Schwenkachse quer zur Fahrrichtung schwenkbar ist, wird bezüglich der Höhe, d.h. dem Abstand zum Boden, sowie in Querrichtung, d.h. der Lage des Vorsatzgerätes quer zur Fahrrichtung, geführt. So werden die Seitenabschnitte mittels positionsgeregelter Stützräder, die außenseitig an den Seitenabschnitten in deren rückwärtigem Bereich angeordnet sind, abgestützt, während sich die Seitenabschnitte um die Schwenkachse relativ zum Mittenabschnitt frei bewegen können. Der Mittenabschnitt wird mittels an der Aufnahmevorrichtung angeordneter Hydraulikzylinder in der Höhe eingestellt. Zur Querführung des Vorsatzgerätes ist vorgesehen, dass das Mittensegment gegenüber der Aufnahmevorrichtung um eine Pendelachse verschwenkt wird.

Ein Verfahren zum Betreiben eines an einer Aufnahmevorrichtung eines selbstfahrenden Mähdreschers angeordneten Vorsatzgerätes ist aus der WO 2020/185873 A1 bekannt.

Ebenfalls ist ein Verfahren nach dem Oberbegriff des Anspruchs 1 aus der US 2021/185917 A1 bekannt.

Ausgehend von dem vorstehend genannten Stand der Technik liegt der Erfindung die Aufgabe zugrunde, ein Verfahren zum Betreiben eines an einer Aufnahmevorrichtung eines selbstfahrenden Mähdreschers angeordneten Vorsatzgerätes der eingangs genannten Art sowie einen selbstfahrenden Mähdrescher weiterzubilden, welches sich durch eine verbesserte Nachführung der Seitenabschnitte des Vorsatzgerätes bei der Anpassung an eine geänderte Bodenkontur auszeichnet.

Diese Aufgabe wird aus verfahrenstechnischer Sicht ausgehend vom Oberbegriff des Anspruchs 1 in Verbindung mit dessen kennzeichnenden Merkmalen gelöst. Weiterhin wird diese Aufgabe aus vorrichtungstechnischer Sicht ausgehend vom Oberbegriff des Anspruchs 12 in Verbindung mit dessen kennzeichnenden Merkmalen gelöst. Die hierauf jeweils folgenden, abhängigen Ansprüche geben vorteilhafte Weiterbildungen der Erfindung wieder.

Gemäß dem Anspruch 1 wird ein Verfahren zum Betreiben eines an einer Aufnahmevorrichtung eines selbstfahrenden Mähdreschers angeordneten Vorsatzgerätes vorgeschlagen, wobei das Vorsatzgerät einen Mittenabschnitt und zwei Seitenabschnitte umfasst, die jeweils durch ein Rahmengelenk mit dem Mittenabschnitt um eine in Fahrtrichtung orientierte Schwenkachse schwenkbar verbunden sind, wobei der jeweilige Seitenabschnitt mittels eines Aktors, der von einer Steuerungsvorrichtung angesteuert wird, relativ zum Mittenabschnitt um die Schwenkachse quer zur Fahrrichtung schwenkbar ist, wobei ein vertikaler Abstand des Vorsatzgerätes zum Boden durch zumindest einen Hydraulikzylinder an der Aufnahmevorrichtung adaptiv eingestellt wird. Erfindungsgemäß ist vorgesehen, dass zur Bodenführung des Vorsatzgerätes die Positionierung der Seitenabschnitte relativ zum Mittenabschnitt unabhängig von einer durch den Mähdrescher angesteuerten Höhen- und Querführung des Vorsatzgerätes gesteuert oder geregelt wird. Wesentlich ist die grundsätzliche Überlegung, dass die Regelung der Position der Seitenabschnitte unabhängig bzw. entkoppelt von einer Höhen- und Querführung des Mähdreschers erfolgt. Es ist keine aktive Querführung des Vorsatzgerätes durch den Mähdrescher erforderlich. Die Höhenführung des Vorsatzgerätes durch den Mähdrescher hat keinen Einfluss auf die Positionierung der Seitenabschnitte. Jeder Seitenabschnitt kann auf Änderungen in der Bodenkontur reagieren, wobei die Positionierung der Seitenabschnitte unabhängig von der Höhen- und Querführung des Vorsatzgerätes in seiner Gesamtheit erfolgt. Hierdurch lässt sich eine optimierte Anpassung an die bestehende Bodenkontur erreichen.

Erfindungsgemäss werden die Seitenabschnitte unter Berücksichtigung von einem auswählbaren Betriebsmodus zur Bodenführung des Vorsatzgerätes gesteuert oder geregelt, wobei die Betriebsmodi aus der Gruppe "Schnitthöhenregelung", "Bodendruckregelung" und "Schnitthöhenvorwahl" ausgewählt werden.

Hierbei kann mittels eines Bedienerterminals oder einer sonstigen mit der Steuerungsvorrichtung verbundenen Eingabe-Ausgabeeinheit einer der Betriebsmodi ausgewählt werden. So wird bei der "Schnitthöhenregelung" als Betriebsmodus zur Bodenführung ein Abstand des Vorsatzgerätes relativ zum Boden durch die Eingabe zumindest eines Sollwertes vorgegeben. Bei der "Bodendruckregelung" als Betriebsmodus zur Bodenführung erfolgt die Bodenführung anhand eines voreingestellten Bodendrucks, indem das Vorsatzgerät mit einem als Sollwert vorgegebenen Gewichtsanteil am Gesamtgewicht des Vorsatzgerätes auf dem Boden abgelegt wird. Der auf den Boden ausgeübte Bodendruck wird durch die Ansteuerung des zumindest einen Hydraulikzylinders an der Aufnahmevorrichtung mittels der Steuerungsvorrichtung eingestellt. Bei der "Schnitthöhenvorwahl" als Betriebsmodus zur Bodenführung wird ein Neigungswinkel der Aufnahmevorrichtung zur Längsachse des Mähdreschers auf einen vorgegebenen Sollwert eingestellt.

Bevorzugt kann die Positionierung der Seitenabschnitte unabhängig voneinander durch den jeweiligen Aktor durchgeführt werden. Der Aktor kann als Linearantrieb ausgeführt sein, insbesondere als ein Hydraulikzylinder. Vorzugsweise ist der Hydraulikzylinder als doppeltwirkender Hydraulikzylinder ausgeführt. Der jeweilige Aktor verbindet Rahmenelemente der Seitenabschnitte und des Mittenabschnitts miteinander, so dass der jeweilige Seitenabschnitt relativ zum Mittenabschnitt um das Rahmengelenk in vertikaler Richtung verschwenkt werden kann.

Insbesondere können von der Steuerungsvorrichtung Messsignale von jeweils zumindest zwei an dem jeweiligen Seitenabschnitt und dem Mittenabschnitt zueinander beabstandet angeordneten Sensoren empfangen und ausgewertet werden, aus denen ein jeweiliger Abstand der Seitenabschnitte und des Mittenabschnitts zum Boden bestimmt werden. Insbesondere sind jeweils ein Sensor des jeweiligen Seitenabschnitts und des Mittenabschnitts benachbart zur Schwenkachse angeordnet. Zumindest ein weiterer Sensor ist distal zum Mittenabschnitt im Bereich der äußeren Enden der Seitenabschnitte angeordnet.

Dabei kann die Positionierung des jeweiligen Seitenabschnitts in Abhängigkeit von einer sensorisch bestimmten Abstandsdifferenz des jeweiligen Seitenabschnitts zum Boden unabhängig voneinander durch den jeweiligen Aktor durchgeführt werden.

Bevorzugt kann im Betriebsmodus "Schnitthöhenregelung" die Position des jeweiligen Seitenabschnitts relativ zum Mittenabschnitt in Abhängigkeit von einer Abstandsdifferenz eines am äußeren Ende des Seitenabschnitts detektierten Abstands zum Boden und eines im Bereich der Schwenkachse detektierten Abstands zum Boden geregelt werden, indem der Aktor angesteuert wird, bis diese Abstandsdifferenz Null beträgt. Der Aktor wird von der Steuerungsvorrichtung angesteuert, den jeweiligen Seitenabschnitt zu verschwenken, bis die Abstandsdifferenz des am äußeren Ende des Seitenabschnitts detektierten Abstands zum Boden und des im Bereich der Schwenkachse detektierten Abstands zum Boden Null beträgt.

Weiter bevorzugt kann im Betriebsmodus "Bodendruckregelung" das Vorsatzgerät auf dem Boden mit einem voreingestellten Gewichtsanteil am Gesamtgewicht als Sollwert abgelegt werden, welcher durch Druckbeaufschlagung des zumindest einen Hydraulikzylinders eingestellt wird, wobei vorgesehen ist, dass zur Regelung der Positionierung des jeweiligen Seitenabschnittes der Aktor in Abhängigkeit von dem Sollwert und des Teilgewichts des jeweiligen Seitenabschnittes angesteuert werden kann, so dass der Seitenabschnitt mit seinem entsprechenden Teilgewichtsanteil auf dem Boden abgelegt wird. Der voreingestellte Gewichtsanteil, mit dem das Vorsatzgerät auf dem Boden abgelegt wird, ergibt sich aus dem Druck in dem zumindest einen Hydraulikzylinder. Die Positionierung der Seitenabschnitte kann bei den als Hydraulikzylindern ausgeführten Aktoren anhand des Drucks in dem jeweiligen Hydraulikzylinder zwischen dem Mittenabschnitt und dem jeweiligen Seitenabschnitt erfolgen. Die Steuerungsvorrichtung kann den Druck in dem jeweiligen Hydraulikzylinder anhand des Teilgewichtsanteils regeln, mit welchem der jeweilige Seitenabschnitt auf den Boden aufgelegt werden soll.

Weiter bevorzugt kann im Betriebsmodus "Schnitthöhenvorwahl" ein Winkel zwischen der Aufnahmevorrichtung und dem Mähdrescher zur Vorgabe eines Schnitthöhensollwertes voreingestellt werden, wobei vorgesehen ist, dass zur Positionierung des jeweiligen Seitenabschnittes detektiert wird, ob zumindest einer der Sensoren des jeweiligen Seitenabschnittes bei eingestelltem Schnitthöhensollwert einen Kontakt zum Boden aufweist bzw. detektiert. Hierdurch können unterschiedliche Betriebssituationen erfasst werden, in denen das Vorsatzgerät betrieben werden kann. So kann in einer Betriebssituation im Betriebsmodus "Schnitthöhenvorwahl" das Vorsatzgerät durch die Aufnahmevorrichtung soweit angehoben sein, dass keiner der Sensoren den Boden kontaktiert. Dies könnte beispielsweise beim Hochschnitt der Fall sein. In einer alternativen Betriebssituation im Betriebsmodus "Schnitthöhenvorwahl" ist der Schnitthöhensollwert derart gewählt, dass sich das Vorsatzgerät so nahe am Boden befindet, dass zumindest ein Sensor einen Bodenkontakt aufweist bzw. detektiert.

Dabei kann bei einer Detektion, dass alle Sensoren ohne einen Kontakt zum Boden sind, der jeweilige Seitenabschnitt durch Ansteuerung des jeweiligen Aktors in eine Mittellage überführt werden, in welcher der jeweilige Seitenabschnitt im Wesentlichen fluchtend zum Mittenabschnitt positioniert ist.

Hingegen kann bei einer Detektion, dass zumindest einer der Sensoren einen Kontakt zum Boden aufweist, die Positionierung des jeweiligen Seitenabschnitts entsprechend dem Betriebsmodus "Schnitthöhenregelung" durchgeführt werden. Hierdurch kann eine Kollision des jeweiligen Seitenabschnitts mit dem Boden im Betriebsmodus "Schnitthöhenvorwahl" vermieden werden.

Insbesondere kann bei einem Betrieb ohne Auswahl eines Betriebsmodus die Positionierung des jeweiligen Seitenabschnitts entsprechend dem Betriebsmodus "Schnitthöhenvorwahl" durchgeführt werden. Im Betrieb ohne Auswahl eines Betriebsmodus werden die aktuelle Fahrgeschwindigkeit des Mähdreschers oder ein manuelles Ausheben oder Absenken des Vorsatzgerätes überwacht. Überschreitet die Fahrgeschwindigkeit des Mähdreschers einen Schwellwert, beispielsweise 2 km/h oder wird das Vorsatzgerät manuell ausgehoben oder abgesenkt, so wird die Positionierung der Seitenabschnitte analog dem Betriebsmodus "Schnitthöhenvorwahl" angesteuert, um zu gewährleisten, dass die Seitenabschnitte nur dann relativ zum Mittenabschnitt bewegt werden, wenn sich keine Personen im Bereich der Seitenabschnitte aufhalten.

Bevorzugt kann zur Bestimmung der Position eines jeweiligen Seitenabschnittes relativ zum Mittenabschnitt eine Differenz eines am äußeren Ende des Seitenabschnitts durch zumindest einen Sensor detektierten Abstands zum Boden und eines im Bereich der Schwenkachse durch zumindest einen Sensor detektierten Abstands zum Boden bestimmt werden.

Hierzu können im Bereich der Schwenkachse zur Bestimmung des Abstands zum Boden Messsignale jeweils eines an dem Mittenabschnitt und an dem Seitenabschnitt benachbart zur Schwenkachse angeordneten Sensors ausgewertet werden.

Nach einer Lehre gemäß dem Anspruch 13, welcher eigenständige Bedeutung zukommt, wird ein selbstfahrender Mähdrescher mit einem Vorsatzgerät, insbesondere einem als Bandschneidwerk oder Draper ausgeführten Vorsatzgerät, zur Durchführung des vorschlagsgemäßen Verfahrens als solches beansprucht. Auf alle Ausführungen zu dem vorschlagsgemäßen Verfahren, die geeignet sind, die Arbeitsmaschine zu erläutern, darf verwiesen werden.

Insbesondere können zur Detektion des Abstands zum Boden Sensoren an der Unterseite des Vorsatzgerätes angeordnet sind, die als Tastbügel ausgeführt sind. Die Tastbügel sind vorzugsweise mit geringstmöglichem Abstand zum Messerbalken angeordnet, um Änderungen der Bodenkontur führzeitig detektieren zu können. Hierbei können jeweils ein Tastbügel des jeweiligen Seitenabschnitts und des Mittenabschnitts benachbart zur Schwenkachse angeordnet sein. Insbesondere kann zumindest ein weiterer Tastbügel distal zum Mittenabschnitt im Bereich der äußeren Enden der Seitenabschnitte angeordnet sein. Besonders bevorzugt sind an den äußeren Enden der Seitenabschnitte zwei Tastbügel zueinander beabstandet angeordnet, deren Abstand zueinander geringer ist, als der Abstand zu dem Tastbügel des Seitenabschnitts, der benachbart zu der Schwenkachse angeordnet ist.

Alternativ können an dem Mittenabschnitt und den Seitenabschnitten um eine in Querrichtung verlaufende Achse schwenkbare Tragarme angeordnet sein, die einen Messerbalken tragen, wobei zur Erfassung einer vertikale Auslenkung der Tragarme des Mittenabschnitts und der Seitenabschnitte jeweils zwei Sensoren vorgesehen sind, wobei die beiden Sensoren des Mittenabschnitts jeweils als eine mit zumindest einem der Tragarme des Mittenabschnitts drehfest verbundene Messwelle und die beiden Sensoren des jeweiligen Seitenabschnitts als jeweils eine mit zumindest zwei Tragarmen des jeweiligen Seitenabschnitts drehfest verbundene Messwelle und einem der jeweiligen Messwelle zugeordneten Potentiometer ausgeführt sind. Gemäß dieser Ausgestaltung werden Tragarmzusammenschlüsse gebildet, die durch jeweils eine Messwelle miteinander verbunden sind und gemeinsam ein Signal mittels Potentiometer erzeugen. Dadurch erhält die Steuerungsvorrichtung zur Bodenführungsregelung exakt so viele Signale wie notwendig sind, um die Positionen der Seitenabschnitte und des Mittenabschnitts des dreiteiligen Vorsatzgerätes bestimmen zu können. Jeder Abschnitt liefert der Regelung jeweils ein linkes und rechtes Signal, indem jeweils zwei Messwellen pro Seitenabschnitt bzw. Mittenabschnitt mit insgesamt sechs Messwellen vorgesehen sind.

Die Messwellen können in einer spezifischen Betriebsart des Bandschneidwerks, in welcher der Messerbalken über die gesamte Breite des Bandschneidwerks auf dem Boden aufliegt, erfassen, in welcher Position sich der jeweilige um die quer zur Fahrtrichtung verlaufende Achse verschwenkbare Tragarm relativ zum Rahmen des Mittenabschnitts bzw. der Seitenabschnitte befindet.

Die vorliegende Erfindung wird nachstehend anhand eines in den Zeichnungen dargestellten Ausführungsbeispieles näher erläutert.

Es zeigen:

Fig. 1     schematisch und exemplarisch eine Teilansicht eines Mähdreschers mit einem daran angeordneten Vorsatzgerät;

Fig. 2     schematisch und exemplarisch eine Teilansicht eines als Bandschneidwerk ausgeführten Vorsatzgerätes; und

Fig. 3     eine schematische und stark vereinfachte Darstellung des als Bandschneidwerk ausgeführten segmentierten Vorsatzgerätes gemäß Fig. 2.

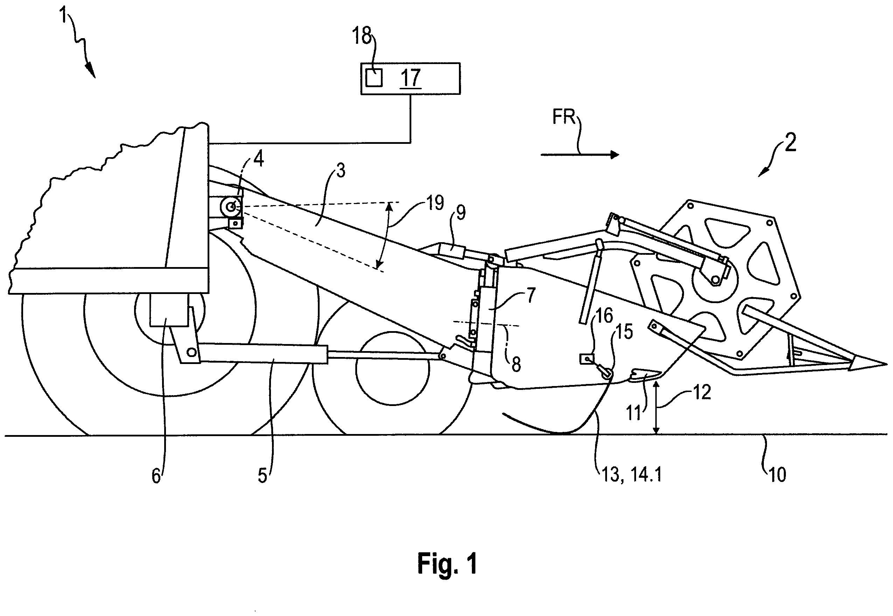

In Fig. 1 ist schematisch und exemplarisch eine Teilansicht eines Mähdreschers 1 mit einem daran angeordneten Vorsatzgerät 2 dargestellt. Das Vorsatzgerät 2 ist an einer Aufnahmevorrichtung 3 angeordnet. Die Aufnahmevorrichtung 3 ist um eine Schwenkachse 4 vertikal zur Fahrtrichtung FR verschwenkbar. Die Aufnahmevorrichtung 3 ist durch zumindest einen Hydraulikzylinder 5, der mit einem Ende an einer Konsole 6 des Mähdreschers 1 und mit seinem kolbenstangenseitigen Ende an der Aufnahmevorrichtung 3 angelenkt ist, um die quer zur Fahrtrichtung FR verlaufende Schwenkachse 4 schwenkbar.

Mittels zweier Hubzylinder 7, von denen in Fig. 1 nur einer sichtbar ist, wird eine Queranpassung des Vorsatzgerätes 2 auf das aktuelle Bodenniveau geregelt, wobei im vorliegenden Ausführungsbeispiel die Hubzylinder 7 das Vorsatzgerät 2 in an sich bekannter Weise um eine in Fahrtrichtung FR weisende virtuelle Pendelachse 8 verschwenken können. Ein auf der Oberseite der Aufnahmevorrichtung 3 angeordneter Hydraulikzylinder 9 ermöglicht es, einen Schnittwinkel einzustellen, welcher vom Vorsatzgerät 2 und vom Boden 10 eingeschlossen wird.

Das Vorsatzgerät 2 umfasst einen Messerbalken 11, welcher in einem einstellbaren Abstand 12 zum Boden 10 geführt wird. Der Abstand 12 wird durch die Hydraulikzylinder 5 eingestellt. Um die Einhaltung des Abstands 12 zum Boden zu überwachen, sind an der Unterseite des Vorsatzgerätes 2 mehrere Sensoren 13 angeordnet. Im dargestellten Ausführungsbeispiel sind die Sensoren 13 als mehrere Tastbügel 14.1 bis 14.8 ausgeführt, die jeweils um eine quer zur Fahrtrichtung FR verlaufende Welle 15 schwenkbar sind. Die Schwenkbewegung des jeweiligen Tastbügels 14.1 bis 14.8 wird mittels jeweils eines Potentiometers 16, das mit der jeweiligen Welle 15 gekoppelt ist, bestimmt. Zur Ansteuerung des Mähdreschers 1 und dessen Arbeitsaggregaten, wozu unter anderem das Vorsatzgerät 2 und die Aufnahmevorrichtung 3 zählen, ist eine Steuerungsvorrichtung 17 vorgesehen.

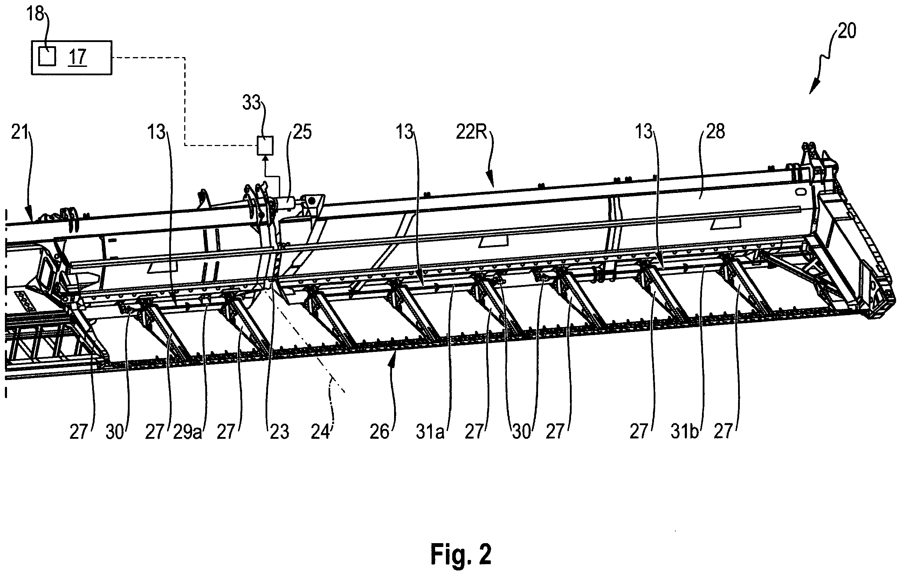

Fig. 2 zeigt schematisch und exemplarisch eine Teilansicht eines als Bandschneidwerk 20 ausgeführten Vorsatzgerätes 2. Der Aufbau des als Bandschneidwerk 20 ausgeführten Vorsatzgerätes 2 ist spiegelsymmetrisch, so dass die nachfolgenden Ausführungen für die nicht dargestellte Hälfte des Bandschneidwerks 20 entsprechend gelten. Das Bandschneidwerk 20 umfasst einen, in Fig. 2 zur Hälfte dargestellten, Mittenabschnitt 21 sowie zumindest zwei Seitenabschnitte 22L, 22R. Von den Seitenabschnitte 22L, 22R ist in Fig. 2 lediglich einer gezeigt. Das Bandschneidwerk 20 ist im Bereich des Mittenabschnitts 21 an der Aufnahmevorrichtung 3 angeordnet. Zur Förderung des aufgenommenen Erntegutes sind - nicht dargestellte - Förderbänder vorgesehen, welche in bekannter Weise das Erntegut von den Seitenabschnitten 22L, 22R seitwärts zum Mittenabschnitt 21 fördern. Der jeweilige Seitenabschnitt 22L, 22R ist durch jeweils ein Rahmengelenk 23 mit dem Mittenabschnitt 21 um eine parallel zur Fahrtrichtung FR orientierten und im Wesentlichen horizontal verlaufenden Schwenkachse 24 schwenkbar verbunden. Der jeweilige Seitenabschnitt 22L, 22R ist mittels eines Aktors 25 relativ zum Mittenabschnitt 21 um die Schwenkachse 24 in vertikaler Richtung schwenkbar. Dem hier und vorzugsweise als Hydraulikzylinder ausgeführten Aktor 25 ist ein Drucksensor 33 zugeordnet, durch welchen die Druckbeaufschlagung des Aktors 25 erfasst wird, um diese durch die Steuerungsvorrichtung 17 anzusteuern. Der jeweiligen Schwenkachse 24 ist eine, insbesondere als Potentiometer ausgeführte, Sensoreinrichtung zugeordnet, welche der Bestimmung der Lage des jeweiligen Seitenabschnittes 22L, 22R relativ zum Mittenabschnitt 21 dient.

Im frontseitigen Bereich des als Bandschneidwerk 20 ausgeführten Vorsatzgerätes 2 ist ein flexibler Messerbalken 26 angeordnet, der sich im Wesentlichen über die Gesamtbreite des Bandschneidwerks 20 erstreckt. Eine Mehrzahl von über die Breite des Bandschneidwerks 20 verteilt angeordneter Tragarme 27, die mit einem Ende um eine quer zur Fahrtrichtung FR verlaufende Achse schwenkbar am in den Mittenabschnitt 21 sowie die zumindest zwei Seitenabschnitte 22L, 22R unterteilten bzw. segmentierten Rahmen 28 des Bandschneidwerks 20 angeordnet sind, tragen den Messerbalken 26. Durch die individuelle Schwenkbarkeit der Tragarme 27 kann der flexible Messerbalken 26 in vertikaler Richtung eine Ausgleichsbewegung ausführen, um auf eine Änderung der Bodenkontur zu reagieren. Dabei kann der Messerbalken 26 eine im Wesentlichen wellenförmige Auslenkung erfahren.

Die beidseitig benachbart zur Aufnahmevorrichtung 3 angeordneten Tragarme 27 des Mittenabschnitts 21 sind durch jeweils eine Messwelle 29a, 29b, die drehfest mit den jeweiligen Tragarmen 27 verbunden ist, miteinander verbunden. An der jeweiligen Messwelle 29a, 29b ist zumindest ein Potentiometer 30 angeordnet, durch welches die vertikale Auslenkung der durch die Messwelle 29a, 29b miteinander verbunden Tragarme 27 erfasst wird. Die Tragarme 27 der Seitenabschnitte 22 sind ebenfalls durch Messwellen 31a, 31b, die drehfest mit dem jeweiligen Tragarm 27 verbunden ist, miteinander verbunden. Hier und vorzugsweise sind zumindest zwei Messwellen 31a, 31b bzw. 32a, 32b an jedem Seitenabschnitt 22 vorgesehen, von denen die Messwelle 31a bzw. 32a, ausgehend vom Mittenschnitt 21, zwei oder mehr Tragarme 27 messtechnisch miteinander koppelt. Die Messwelle 31b bzw. 32b koppelt, ausgehend vom äußeren Endbereich des Seitenabschnitts 22L, 22R zwei oder mehr Tragarme 27 messtechnisch miteinander.

An der jeweiligen Messewelle 31a, 31b, 32a, 32b ist ebenfalls zumindest ein Potentiometer 30 angeordnet. Die Messwellen 29a, 29b, 31a, 31b, 32a, 32b und die zugehörigen Potentiometer 30 bilden ebenfalls Sensoren 13, mit denen ein vertikaler Abstand 12 des Bandschneidwerks 20 zum Boden 10 in an sich bekannter Weise bestimmt wird. Die Messwellen 29a, 29b, 31a, 31b, 32a, 32b erfassen in einer spezifischen Betriebsart des Bandschneidwerks 20, in welcher der Messerbalken 26 über die gesamte Breite des Bandschneidwerks 20 auf dem Boden 10 aufliegt, in welcher Position sich der jeweilige um die quer zur Fahrtrichtung FR verlaufende Achse verschwenkbare Tragarm 27 relativ zum Rahmen 28 des Mittenabschnitts 21 bzw. der Seitenabschnitte 22R, 22L befindet. Der segmentierte Rahmen 28 wird dabei durch das Anheben und Absenken der Aufnahmevorrichtung 3 in einer gewünschten Position zu den Tragarmen 27 geführt, während der Messerbalken 26 der Bodenkontur folgt. Bei einem Betrieb in dieser spezifischen Betriebsart des Bandschneidwerks 20 wird der Abstand des segmentierten Rahmens 28 zum Boden 10 für jedes Rahmensegment mittels der Messwellen 29a, 29b, 31a, 31b, 32a, 32b bestimmt.

Durch die drehfeste Verbindung der Tragarme 27 mit der jeweiligen Messwelle 29a, 29b, 31a, 31b, 32a, 32b wird die Auslenkung der Tragarme 27 durch eine Auslenkung in vertikaler Richtung aufgrund der Bodenkontur erfasst. Die Signale der Messwellen 29a, 29b, 31a, 31b, 32a, 32b werden analog zu den Signalen der als Tastbügel 14.1 bis 14.8 ausgeführten Sensoren 13 durch die Steuerungsvorrichtung 17 des Mähdreschers 1 ausgewertet.

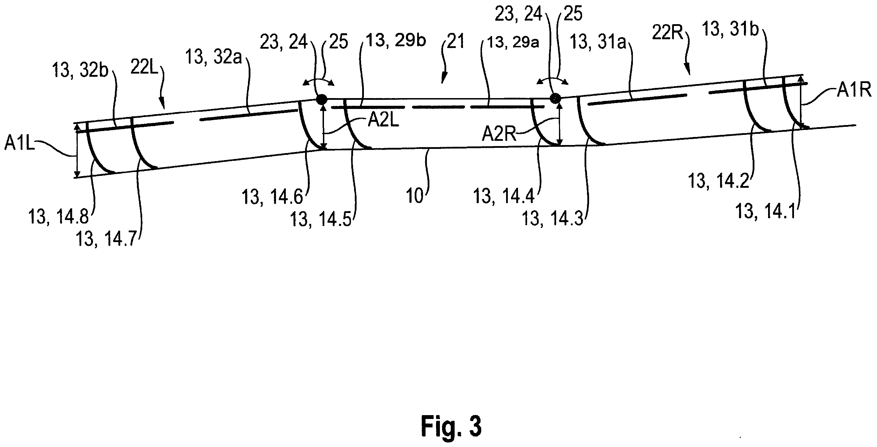

Die Darstellung in Fig. 3 zeigt eine schematische und stark vereinfachte Darstellung des als Bandschneidwerk 20 ausgeführten segmentierten Vorsatzgerätes 3 gemäß Fig. 2. Die Darstellung zeigt aus Gründen der Vereinfachung gleichzeitig die Anordnung der Sensoren 13, die entweder als Tastbügel 14.1 bis 14.8 oder als Messwellen 29a, 29b, 31a, 31b, 32a, 32b sein können. Die grundsätzliche Verfahrensweise, mit welcher zur Bodenführung des Vorsatzgerätes 2 die Positionierung der Seitenabschnitte 22L, 22R relativ zum Mittenabschnitt 21 unabhängig von einer durch den Mähdrescher 1 angesteuerten Höhen- und Querführung des Vorsatzgerätes 2 gesteuert oder geregelt wird, unterscheidet sich dabei nicht. Es kann lediglich die Art und/oder Anzahl der Sensoren 13 variieren.

Die Aktoren 25, welche den jeweiligen Seitenabschnitt 22L, 22R relativ zum Mittenabschnitt 21 um die Schwenkachse 24 schwenken, sind durch Pfeile symbolisch angedeutet. Dies gilt entsprechend für die symbolische Darstellung der Rahmengelenke 23 und der Schwenkachsen 24 zwischen dem Mittenabschnitt 21 und den Seitenabschnitten 22.

Die Seitenabschnitte 22L, 22R werden unter Berücksichtigung von einem auswählbaren Betriebsmodus zur Bodenführung des Vorsatzgerätes 2 gesteuert oder geregelt. Die Betriebsmodi können aus der Gruppe "Schnitthöhenregelung", "Bodendruckregelung" und "Schnitthöhenvorwahl" ausgewählt werden. Hierbei kann mittels eines Bedienerterminals oder einer sonstigen mit der Steuerungsvorrichtung 17 des Mähdreschers 1 verbundenen Eingabe-Ausgabeeinheit 18 einer der Betriebsmodi ausgewählt werden.

Bei der Schnitthöhenregelung als Betriebsmodus zur Bodenführung wird der Abstand 12 des Vorsatzgerätes 3 relativ zum Boden 10 durch die Eingabe zumindest eines Sollwertes vorgegeben. Bei der Bodendruckregelung als Betriebsmodus zur Bodenführung erfolgt die Bodenführung anhand eines voreingestellten Bodendrucks, indem das Vorsatzgerät 3 mit einem als Sollwert vorgegebenen Gewichtsanteil am Gesamtgewicht des Vorsatzgerätes 3 auf dem Boden 10 abgelegt wird. Der auf den Boden 10 ausgeübte Bodendruck wird durch die Ansteuerung des zumindest einen Hydraulikzylinders 5 an der Aufnahmevorrichtung 3 eingestellt. Bei der Schnitthöhenvorwahl als Betriebsmodus zur Bodenführung wird ein Neigungswinkel 19, um den der Aufnahmevorrichtung 3 relativ zum Mähdrescher 1 um die horizontal verlaufende Schwenkachse 4 verschwenkt ist, auf einen vorgegebenen Sollwert für die Position der Aufnahmevorrichtung 3 relativ zum Boden 10, eingestellt.

Im Betriebsmodus "Schnitthöhenregelung" wird die Position des jeweiligen Seitenabschnitts 22R, 22L relativ zum Mittenabschnitt 21 in Abhängigkeit von einer Abstandsdifferenz $\Delta T_R$ bzw. $\Delta T_L$ eines am äußeren Ende des jeweiligen Seitenabschnitts 22L, 22R detektierten Abstands A1R, A1L zum Boden 10 und eines im Bereich der Schwenkachse 24 detektierten Abstands A2R, A2L zum Boden 10 geregelt, indem der Aktor 25 angesteuert wird, bis die jeweilige Abstandsdifferenz $\Delta T_R$ bzw. $\Delta T_L$ der Seitenabschnitte 22R, 22L Null beträgt.

Hierzu wird die Abstandsdifferenz $\Delta T_R$ bzw. die Abstandsdifferenz $\Delta T_L$ des jeweiligen Seitenabschnitts 22R, 22L im Fall von als Tastbügeln 14.1 bis 14.8 ausgeführten Sensoren 13 wie folgt bestimmt:

$$\Delta T_R = \min(14.1, 14.2) - \min(14.3, 14.4)$$

und

$$\Delta T_L = min(14.7, 14.8) - min(14.5, 14.6).$$

Dabei wird jeweils der durch die Tastbügel 14.1, 14.2 bzw. 14.7.14.8 sowie 14.3, 14.4 bzw. 14.5.14.6 erfasste Minimalwert für einen Abstand A1R, A1L bzw. A2R, A2L verwendet. Das Ziel der Regelung ist, dass die Abstandsdifferenz $\Delta T_R$ bzw. $\Delta T_L$ der Seitenabschnitte 22R, 22L jeweils Null beträgt.

Im Fall von Messwellen 29a, 29b, 31a, 1b, 32a, 32b als Sensoren 13 werden Abstandsdifferenzen $\Delta F_R$ bzw. $\Delta F_L$ abweichend von der Verwendung von Tastbügeln 14.1 bis 14.8, welche aufgrund ihrer spezifischen Anordnung punktuell messen, durch eine Auswertung von an mehrerer Stellen des jeweiligen Seitenabschnitts 22R, 22L erfassten Abständen eines jeweiligen Seitenabschnitts 22R, 22L bestimmt. Die Messwellen 31b, 32b erfassen den Abstand A1R, A1L an den äußeren Enden der Seitenabschnitte 22R, 22L, während die Messwellen 31a, 32a einen Wert für den Abstand A2R, A2L im Bereich der Schwenkachse 24 erfassen. 22L. Die Messwellen 29a, 29a am Mittenabschnitt 21 erfassen ebenfalls einen Wert für den Abstand A2R, A2L.

Beispielhaft wird die Bestimmung der Abstandsdifferenz $\Delta F_R$ am Seitenabschnitt 22R erläutert. Die nachfolgenden Ausführungen gelten entsprechend für den Seitenabschnitt 22L.

Es werden eine Abstandsdifferenz $\Delta F_{R,MA}$ aus den bestimmten Abstandswerten der Messwellen 31b und 31a des Seitenabschnitts 22R, eine Abstandsdifferenz $\Delta F_{R,IM}$ aus den bestimmten Abstandswerten der Messwelle 31a am Seitenabschnitt 22R und der Messwelle 29a am Mittenabschnitt 21 sowie eine Abstandsdifferenz $\Delta F_{R,IA}$ aus den bestimmten Abstandswerten der Messwelle 29a am Mittenabschnitt 21 und der Messwelle 31b am Seitenabschnitt 22R. Wie bei der Regelung mit den Tastbügeln 14.1 bis 14.8 auch, ist es die Zielstellung, dass die Abstandsdifferenz $\Delta F_R$ bzw. $\Delta F_L$ durch die Ansteuerung der Aktoren 25 durch die Steuerungsvorrichtung 17 jeweils auf den Wert Null geregelt wird.

Die die Abstandsdifferenz $\Delta F_R$ wird dabei wie folgt bestimmt:

$$\Delta F_R = \begin{cases} \Delta F_{R,IA} \; f\ddot{u}r \; |\Delta F_{R,MA}| > |\Delta F_{R,IM}| \\ -\Delta F_{R,IA} \; f\ddot{u}r \; |\Delta F_{R,MA}| \leq |\Delta F_{R,IM}| \end{cases}.$$

Im Betriebsmodus "Bodendruckregelung" wird das Vorsatzgerät 2 auf dem Boden 10 mit einem voreingestellten Gewichtsanteil am Gesamtgewicht als Sollwert abgelegt. Der Gewichtsanteil wird durch die Druckbeaufschlagung des zumindest einen Hydraulikzylinders 5 eingestellt. Zur Regelung der Positionierung des jeweiligen Seitenabschnittes 22R, 22L wird der Aktor 25 in Abhängigkeit von dem Sollwert und dem Teilgewicht des jeweiligen Seitenabschnittes 22R, 22L angesteuert, so dass der jeweilige Seitenabschnitt 22R, 22L mit seinem entsprechenden Teilgewichtsanteil auf dem Boden 10 aufgelegt wird. Die voneinander unabhängige Positionierung der Seitenabschnitte 22R, 22L kann bei den als Hydraulikzylindern ausgeführten Aktoren 25 anhand des Drucks in dem jeweiligen Hydraulikzylinder zwischen dem Mittenabschnitt 21 und dem jeweiligen Seitenabschnitt 22R, 22L erfolgen. Die Steuerungsvorrichtung 17 kann den Druck in dem jeweiligen Hydraulikzylinder anhand des Teilgewichtsanteils des jeweiligen Seitenabschnitts 22R, 22L regeln, mit welchem der jeweilige Seitenabschnitt 22R, 22L auf den Boden 10 aufgelegt werden soll.

Im Betriebsmodus "Schnitthöhenvorwahl" wird der Neigungswinkel 19 zwischen der Aufnahmevorrichtung 3 und dem Mähdrescher 1 zur Vorgabe eines Schnitthöhensollwertes voreingestellt, wobei vorgesehen ist, dass zur Positionierung des jeweiligen Seitenabschnittes 22R. 22L detektiert wird, ob zumindest einer der Sensoren 13 des jeweiligen Seitenabschnittes 22R, 22L bei eingestelltem Schnitthöhensollwert einen Kontakt zum Boden 10 aufweist. Hierdurch können unterschiedliche Betriebssituationen erfasst werden, in denen das Vorsatzgerät 2 betrieben werden kann. So kann in einer Betriebssituation im Betriebsmodus "Schnitthöhenvorwahl" das Vorsatzgerät 2 durch die Aufnahmevorrichtung 3 soweit angehoben sein, dass keiner der Sensoren 13 den Boden kontaktiert bzw. im Fall der als Messwellen 29a, 29b, 31a, 31b, 32a, 32b ausgeführten Sensoren 13 einen Kontakt zum Boden detektiert. Dies könnte beispielsweise beim Hochschnitt der Fall sein. In einer alternativen Betriebssituation im Betriebsmodus "Schnitthöhenvorwahl" ist der Schnitthöhensollwert derart gewählt, dass sich das Vorsatzgerät 2 so nahe am Boden 10 befindet, dass zumindest ein Sensor 13 einen Bodenkontakt aufweist bzw. detektiert.

Dabei kann bei einer Detektion, dass alle Sensoren 13 ohne einen Kontakt zum Boden sind, der jeweilige Seitenabschnitt 22R, 22L durch Ansteuerung des jeweiligen Aktors 25 in eine Mittellage überführt werden, in welcher der jeweilige Seitenabschnitt 22R, 22L im Wesentlichen fluchtend zum Mittenabschnitt 21 positioniert ist. Zur Ansteuerung werden dabei die Signale der jeweiligen Schwenkachse 24 zugeordneten Sensoreinrichtung verwendet.

Hingegen wird bei einer Detektion, dass zumindest einer der Sensoren 13 einen Kontakt zum Boden aufweist bzw. detektiert, die Positionierung des jeweiligen Seitenabschnitts 22R, 22L entsprechend dem Betriebsmodus "Schnitthöhenregelung" durchgeführt. Hierdurch kann eine Kollision des jeweiligen Seitenabschnitts 22R, 22L mit dem Boden 10 im Betriebsmodus "Schnitthöhenvorwahl" vermieden werden.

Insbesondere kann bei einem Betrieb ohne Auswahl eines Betriebsmodus die Positionierung des jeweiligen Seitenabschnitts 22R, 22L entsprechend dem Betriebsmodus "Schnitthöhenvorwahl" durchgeführt werden. Im Betrieb ohne Auswahl eines Betriebsmodus werden die aktuelle Fahrgeschwindigkeit des Mähdreschers 1 oder ein manuelles Ausheben oder Absenken des Vorsatzgerätes 2 überwacht. Überschreitet die Fahrgeschwindigkeit des Mähdreschers 1 einen Schwellwert, beispielsweise 2 km/h oder wird das Vorsatzgerät 2 manuell ausgehoben, so wird die Positionierung der Seitenabschnitte 22R, 22L analog dem Betriebsmodus "Schnitthöhenvorwahl" durchgeführt, um zu gewährleisten, dass die Seitenabschnitte 22R, 22L nur dann relativ zum Mittenabschnitt 21 bewegt werden, wenn sich keine Personen im Bereich der Seitenabschnitte 22R, 22L aufhalten.

### Bezugszeichenliste

| | | | | |
|---|---|---|---|---|
| 1 | Mähdrescher | 26 | Messerbalken |
| 2 | Vorsatzgerät | 27 | Tragarm |
| 3 | Aufnahmevorrichtung | 28 | Rahmen |
| 4 | Schwenkachse | 29a | Messwelle |
| 5 | Hydraulikzylinder | 29b | Messwelle |
| 6 | Konsole | 30 | Potentiometer |
| 7 | Hubzylinder | 31A | Messwelle |
| 8 | Pendelachse | 31B | Messwelle |
| 9 | Hydraulikzylinder | 32A | Messwelle |
| 10 | Boden | 32B | Messwelle |
| 11 | Messerbalken | 33 | Drucksensor |
| 12 | Abstand | A1L | Abstand |
| 13 | Sensor | A1R | Abstand |
| 14.1 | Tastbügel | A2L | Abstand |
| 142 | Tastbügel | A2R | Abstand |
| 14.3 | Tastbügel | FR | Fahrtrichtung |
| 14.4 | Tastbügel | | |

(fortgesetzt)

| 14.5 | Tastbügel |
|------|-----------|
| 14.6 | Tastbügel |
| 14.7 | Tastbügel |
| 14.8 | Tastbügel |
| 15 | Welle |
| 16 | Potentiometer |
| 17 | Steuerungsvorrichtung |
| 18 | Eingabe-Ausgabeeinheit |
| 19 | Neigungswinkel |
| 20 | Bandschneidwerk |
| 21 | Mittenabschnitt |
| 22R | Seitenabschnitt |
| 22L | Seitenabschnitt |
| 23 | Rahmengelenk |
| 24 | Schwenkachse |
| 25 | Aktor |

**Patentansprüche**

1. Verfahren zum Betreiben eines an einer Aufnahmevorrichtung (3) eines selbstfahrenden Mähdreschers (1) angeordneten Vorsatzgerätes (2, 20), wobei das Vorsatzgerät (2, 20) einen Mittenabschnitt (21) und zwei Seitenabschnitte (22R, 22L) umfasst, die jeweils durch ein Rahmengelenk (23) mit dem Mittenabschnitt (21) um eine in Fahrtrichtung (FR) orientierte Schwenkachse (24) schwenkbar verbunden sind, wobei der jeweilige Seitenabschnitt (22R, 22L) mittels eines Aktors (25), der von einer Steuerungsvorrichtung (17) angesteuert wird, relativ zum Mittenabschnitt (21) um die Schwenkachse (24) quer zur Fahrrichtung (FR) schwenkbar ist, wobei ein vertikaler Abstand (12) des Vorsatzgerätes (2) zum Boden durch zumindest einen Hydraulikzylinder (5) an der Aufnahmevorrichtung (3) adaptiv eingestellt wird, wobei zur Bodenführung des Vorsatzgerätes (2) die Positionierung der Seitenabschnitte (22R, 22L) relativ zum Mittenabschnitt (21) unabhängig von einer durch den Mähdrescher (1) angesteuerten Höhen- und Querführung des Vorsatzgerätes (2) gesteuert oder geregelt wird,
**dadurch gekennzeichnet, dass** die Seitenabschnitte (22R, 22L) unter Berücksichtigung von einem auswählbaren Betriebsmodus zur Bodenführung des Vorsatzgerätes (2, 20) gesteuert oder geregelt werden, wobei die Betriebsmodi aus der Gruppe "Schnitthöhenregelung", "Bodendruckregelung" und "Schnitthöhenvorwahl" ausgewählt werden.

2. Verfahren nach Anspruch 1, **dadurch gekennzeichnet, dass** die Positionierung der Seitenabschnitte (22R, 22L) unabhängig voneinander durch den jeweiligen Aktor (25) durchgeführt wird.

3. Verfahren nach einem der Ansprüche 1 bis 2, **dadurch gekennzeichnet, dass** von der Steuerungsvorrichtung (17) Messsignale von jeweils zumindest zwei an dem jeweiligen Seitenabschnitt (22R, 22L) und dem Mittenabschnitt (21) zueinander beabstandet angeordneten Sensoren (13) empfangen und ausgewertet werden, aus denen ein jeweiliger Abstand (A1R, A2R, A1L, A2L) der Seitenabschnitte (22R, 22L) und des Mittenabschnitts (21) zum Boden (10) bestimmt werden.

4. Verfahren nach einem der vorangehenden Ansprüche, **dadurch gekennzeichnet, dass** im Betriebsmodus "Schnitthöhenregelung" die Position des jeweiligen Seitenabschnitts (22R, 22L) relativ zum Mittenabschnitt (21) in Abhängigkeit von einer Abstandsdifferenz ($\Delta TR$, $\Delta TL$; $\Delta FR$, $\Delta FL$) eines am äußeren Ende des Seitenabschnitts (22R, 22L) detektierten Abstands (A1R, A1L) zum Boden (10) und eines im Bereich der Schwenkachse (24) detektierten Abstands (A2R, A2L) zum Boden (10) geregelt wird, indem der Aktor (25) angesteuert wird, bis die Abstandsdifferenz ($\Delta TR$, $\Delta TL$; $\Delta F_R$, $\Delta FL$) Null beträgt.

5. Verfahren nach einem der Ansprüche 1 bis 4, **dadurch gekennzeichnet, dass** im Betriebsmodus "Bodendruckregelung" das Vorsatzgerät (2, 20) auf dem Boden (10) mit einem voreingestellten Gewichtsanteil am Gesamtgewicht als Sollwert abgelegt wird, welcher durch Druckbeaufschlagung des zumindest einen Hydraulikzylinders (5) eingestellt wird, und dass zur Regelung der Positionierung des jeweiligen Seitenabschnittes (22R, 22L) der Aktor (25) in Abhängigkeit von dem Sollwert und des Teilgewichts des jeweiligen Seitenabschnittes (22R, 22L) angesteuert wird, so dass der jeweilige Seitenabschnitt (22R, 22L) mit seinem entsprechenden Teilgewichtsanteil auf dem Boden (10) abgelegt wird.

6. Verfahren nach einem der Ansprüche 1 bis 5, **dadurch gekennzeichnet, dass** im Betriebsmodus "Schnitthöhenvorwahl" ein Neigungswinkel (19) zwischen der Aufnahmevorrichtung (3) und dem Mähdrescher (1) zur Vorgabe eines Schnitthöhensollwertes voreingestellt wird, und dass zur Positionierung des jeweiligen Seitenabschnittes (22R, 22L) detektiert wird, ob zumindest einer der Sensoren (13) des jeweiligen Seitenabschnittes (22R, 22L) bei eingestelltem Schnitthöhensollwert einen Kontakt zum Boden (10) aufweist bzw. detektiert.

7. Verfahren nach Anspruch 6, **dadurch gekennzeichnet, dass** bei einer Detektion, dass alle Sensoren (13) ohne einen Kontakt zum Boden (10) sind, der jeweilige Seitenabschnitt (22R, 22L) durch Ansteuerung des jeweiligen Aktors (25) in eine Mittellage überführt wird, in welcher der jeweilige Seitenabschnitt (22R, 22L) im Wesentlichen fluchtend zum Mittenabschnitt (21) positioniert ist.

8. Verfahren nach Anspruch 6, **dadurch gekennzeichnet, dass** bei einer Detektion, dass zumindest einer der Sensoren (13) einen Kontakt zum Boden (10) aufweist bzw. detektieren, die Positionierung des jeweiligen Seitenabschnitts (22R, 22L) entsprechend dem Betriebsmodus "Schnitthöhenregelung" durchgeführt wird.

9. Verfahren nach einem der Ansprüche 1 bis 8, **dadurch gekennzeichnet, dass** bei einem Betrieb ohne Auswahl eines Betriebsmodus die Positionierung des jeweiligen Seitenabschnitts (22R, 22L) entsprechend dem Betriebsmodus "Schnitthöhenvorwahl" durchgeführt wird.

10. Verfahren nach einem der vorangehenden Ansprüche, **dadurch gekennzeichnet, dass** zur Bestimmung der Position eines jeweiligen Seitenabschnittes (22R, 22L) relativ zum Mittenabschnitt (21) die Differenz eines am äußeren Ende des Seitenabschnitts (22R, 22L) durch zumindest einen Sensor (13) detektierten Abstands (A1R, A1L) zum Boden (10) und eines im Bereich der Schwenkachse (24) durch zumindest einen Sensor (13) detektierten Abstands (A2R, A2L) zum Boden (10) bestimmt wird.

11. Verfahren nach Anspruch 10, **dadurch gekennzeichnet, dass** im Bereich der Schwenkachse (24) zur Bestimmung des Abstands (A2R, A2L) zum Boden (10) Messsignale jeweils eines an dem Mittenabschnitt (21) und an dem Seitenabschnitt (22R, 22L) benachbart zur Schwenkachse (24) angeordneten Sensors (13) ausgewertet werden.

12. Selbstfahrender Mähdrescher (1) mit einem segmentierten Vorsatzgerät (2), insbesondere einem Bandschneidwerk (20), und einer Steuervorrichtung (17), die zur Durchführung des Verfahrens nach einem der vorangehenden Ansprüche ausgelegt ist.

13. Selbstfahrender Mähdrescher (1) nach Anspruch 12, **dadurch gekennzeichnet, dass** zur Detektion eines Abstands (A1R, A1L, A2R, A2L zum Boden (10) Sensoren (13) an der Unterseite des Vorsatzgerätes (2) angeordnet sind, die als Tastbügel (14.1 bis 14.8) ausgeführt sind.

14. Selbstfahrender Mähdrescher (1) nach Anspruch 12, **dadurch gekennzeichnet, dass** an dem Mittenabschnitt (21) und den Seitenabschnitten (22R, 22L) um eine in Querrichtung verlaufende Achse schwenkbare Tragarme (27) angeordnet sind, die einen Messerbalken (26) tragen, wobei zur Erfassung einer vertikale Auslenkung der Tragarme (27) des Mittenabschnitts (21) und der Seitenabschnitte (22R, 22L) jeweils zwei Sensoren (13) vorgesehen sind, wobei die beiden Sensoren (13) des Mittenabschnitts (21) jeweils als eine mit zumindest einem der Tragarme (27) des Mittenabschnitts (21) drehfest verbundene Messwelle (29a, 29b) und die beiden Sensoren (13) der Seitenabschnitte (22R. 22L) als jeweils eine mit zumindest zwei Tragarmen (27) des jeweiligen Seitenabschnitts (22R, 22L) drehfest verbundene Messwelle (31a, 31b, 32a, 32b) und einem der jeweiligen Messwelle (29a, 29b, 31a, 31b, 32a, 32b) zugeordneten Potentiometer (30) ausgeführt sind.

**Claims**

1. A method for operating a front attachment (2, 20) disposed on a pick-up device (3) of a self-propelled combine harvester (1), wherein the front attachment (2, 20) comprises a centre section (21) and two side sections (22R, 22L) which are respectively pivotably connected to the centre section (21) about a pivot axis (24) oriented in the direction of travel (FR) by a frame joint (23), wherein the respective side section (22R, 22L) is pivotable about the pivot axis (24) relative to the centre section (21) transversely to the direction of travel (FR) by means of an actuator (25) which is controlled by a control device (17), wherein a vertical distance (12) of the front attachment (2) from the ground is adaptively set by at least one hydraulic cylinder (5) on the pick-up device (3), wherein, for the ground guidance of the front attachment (2), the positioning of the side sections (22R, 22L) relative to the centre section (21) is controlled or regulated independently of vertical and transverse guidance of the front attachment (2) controlled by the combine harvester (1),

**characterized in that** the side sections (22R, 22L) are controlled or regulated taking into account a selectable operational mode for the ground guidance of the front attachment (2, 20), wherein the operational modes are selected from the "cutting height regulation", "ground pressure regulation" and "cutting height preselection" group.

2. The method according to claim 1, **characterized in that** the positioning of the side sections (22R, 22L) is carried out independently of one another by the respective actuator (25).

3. The method according to one of claims 1 and 2, **characterized in that** measurement signals from at least two sensors (13) respectively disposed in a manner spaced apart from one another on the respective side section (22R, 22L) and the centre section (21) are received and evaluated by the control device (17), from which measurement signals a respective distance (A1R, A2R, A1L, A2L) of the side sections (22R, 22L) and of the centre section (21) from the ground (10) are determined.

4. The method according to one of the preceding claims, **characterized in that,** in the "cutting height regulation" operational mode, the position of the respective side section (22R, 22L) relative to the centre section (21) is regulated as a function of a difference in distance ($\Delta$TR, $\Delta$TL; $\Delta$FR, $\Delta$FL) between a distance (A1R, A1L) from the ground (10) detected at the outer end of the side section (22R, 22L) and a distance (A2R, A2L) from the ground (10) detected in the region of the pivot axis (24), in which the actuator (25) is controlled until the difference ($\Delta$TR, $\Delta$TL; $\Delta$FR, $\Delta$FL) in distance is zero.

5. The method according to one of claims 1 to 4, **characterized in that,** in the "ground pressure regulation" operational mode, the front attachment (2, 20) is placed on the ground (10) with a preset proportion by weight of the total weight as the nominal value, which is set by pressurization of the at least one hydraulic cylinder (5), and **in that**, in order to regulate the positioning of the respective side section (22R, 22L), the actuator (25) is controlled as a function of the nominal value and of the part weight of the respective side section (22R, 22L) in a manner such that the respective side section (22R, 22L) is placed on the ground (10) with its corresponding proportion of the part weight.

6. The method according to one of claims 1 to 5, **characterized in that,** in the "cutting height preselection" operational mode, an angle of inclination (19) between the pick-up device (3) and the combine harvester (1) is preset in order to specify a nominal value for the cutting height, and **in that**, in order to position the respective side section (22R, 22L), detection is carried out as to whether at least one of the sensors (13) of the respective side section (22R, 22L) exhibits or detects a contact with the ground (10) in the case of the set cutting height nominal value.

7. The method according to claim 6, **characterized in that** in the case of a detection that none of the sensors (13) is in contact with the ground (10), the respective side section (22R, 22L) is transferred into a central position by control of the respective actuator (25), in which central position the respective side section (22R, 22L) is positioned so as to be substantially in alignment with the centre section (21).

8. The method according to claim 6, **characterized in that** in the case of a detection that at least one of the sensors (13) exhibits or detects a contact with the ground (10), the positioning of the respective side section (22R, 22L) is carried out in accordance with the "cutting height regulation" operational mode.

9. The method according to one of claims 1 to 8, **characterized in that,** in the case of an operation without selection of an operational mode, the positioning of the respective side section (22R, 22L) is carried out in accordance with the "cutting height preselection" operational mode.

10. The method according to one of the preceding claims, **characterized in that,** in order to determine the position of a respective side section (22R, 22L) relative to the centre section (21), the difference between a distance (A1R, A1L) from the ground (10) detected by at least one sensor (13) at the outer end of the side section (22R, 22L) and a distance (A2R, A2L) from the ground (10) detected by at least one sensor (13) in the region of the pivot axis (24) is determined.

11. The method according to claim 10, **characterized in that,** in the region of the pivot axis (24), in order to determine the distance (A2R, A2L) from the ground (10), measurement signals are evaluated from a sensor (13) which is adjacent to the pivot axis (24) respectively disposed on the centre section (21) and on the side section (22R, 22L).

12. A self-propelled combine harvester (1) with a segmented front attachment (2), in particular a draper cutting unit (20), and a control device (17) which is configured for carrying out the method according to one of the preceding claims.

13. The self-propelled combine harvester (1) according to claim 12, **characterized in that,** in order to detect a distance (A1R, A1L, A2R, A2L) from the ground (10), sensors (13) which are configured as sensor arms (14.1 to 14.8) are disposed on the underside of the front attachment (2).

14. The self-propelled combine harvester (1) according to claim 12, **characterized in that** support arms (27) which are pivotable about an axis extending in the transverse direction and which carry a cutter bar (26) are disposed on the centre section (21) and on the side sections (22R, 22L), wherein, in order to detect a vertical deflection of the support arms (27) of the centre section (21) and of the side sections (22R, 22L), two sensors (13) are respectively provided, wherein the two sensors (13) of the centre section (21) are respectively constructed as a measuring shaft (29a, 29b) connected, in a manner which is fixed against rotation, to at least one of the support arms (27) of the centre section (21) and the two sensors (13) of the side sections (22R, 22L) are respectively constructed as a measuring shaft (31a, 31b, 32a, 32b) connected, in a manner which is fixed against rotation, to at least two support arms (27) of the respective side section (22R, 22L), and a potentiometer (30) associated with the respective measuring shaft (29a, 29b, 31a, 31b, 32a, 32b).


## Revendications

1. Procédé pour faire fonctionner une tête de récolte (2, 20) montée sur une structure de fixation (3) d'une moissonneuse-batteuse (1) automotrice, la tête de récolte (2, 20) comprenant une partie médiane (21) et deux parties latérales (22R, 22L) qui sont chacune reliées à la partie médiane (21) par une articulation de bâti (23), avec possibilité de pivotement autour d'un axe de pivotement (24) orienté dans la direction de déplacement (FR), la partie latérale (22R, 22L) respective pouvant être pivotée par rapport à la partie médiane (21) autour de l'axe de pivotement (24), perpendiculairement à la direction de déplacement (FR), au moyen d'un actionneur (25) qui est activé par un dispositif de commande (17), sachant qu'une distance verticale (12) de la tête de récolte (2) par rapport au sol est réglée de manière adaptative par au moins un vérin hydraulique (5) de la structure de fixation (3), sachant que pour le guidage au sol de la tête de récolte (2), le positionnement des parties latérales (22R, 22L) par rapport à la partie médiane (21) est commandé ou réglé indépendamment d'un guidage en hauteur et transversal de la tête de récolte (2) activé par la moissonneuse-batteuse (1), **caractérisé en ce que** les parties latérales (22R, 22L) sont commandées ou réglées en tenant compte d'un mode de fonctionnement pouvant être sélectionné, en vue du guidage au sol de la tête de récolte (2, 20), les modes de fonctionnement étant choisis dans le groupe « réglage de hauteur de coupe », « réglage de pression au sol » et « présélection de hauteur de coupe ».

2. Procédé selon la revendication 1, **caractérisé en ce que** le positionnement des parties latérales (22R, 22L) est réalisé indépendamment l'une de l'autre par l'actionneur (25) respectif.

3. Procédé selon une des revendications 1 à 2, **caractérisé en ce que** le dispositif de commande (17) reçoit et évalue des signaux de mesure en provenance respectivement d'au moins deux capteurs (13) disposés à distance l'un de l'autre sur la partie latérale (22R, 22L) respective et la partie médiane (21), signaux à partir desquels sont déterminées des distances (A1R, A2R, A1L, A2L) respectives des parties latérales (22R, 22L) et de la partie médiane (21) par rapport au sol (10).

4. Procédé selon une des revendications précédentes, **caractérisé en ce qu'**en mode de fonctionnement « réglage de hauteur de coupe », la position de la partie latérale (22R, 22L) respective par rapport à la partie médiane (21) est réglée en fonction d'une différence de distance ($\Delta$TR, $\Delta$TL; $\Delta$FR, $\Delta$FL) d'une distance (A1R, A1L) par rapport au sol (10), détectée à l'extrémité extérieure de la partie latérale (22R, 22L), et d'une distance (A2R, A2L) par rapport au sol (10), détectée dans la région de l'axe de pivotement (24), par le fait d'activer l'actionneur (25) jusqu'à ce que la différence de distance ($\Delta$TR, $\Delta$TL; $\Delta$FR, $\Delta$FL) soit de zéro.

5. Procédé selon une des revendications 1 à 4, **caractérisé en ce qu'**en mode de fonctionnement « réglage de pression au sol », la tête de récolte (2, 20) est déposée au sol (10) avec une part de poids préréglée par rapport au poids total, en tant que valeur de consigne qui est réglée par application d'une pression au vérin hydraulique (5), au nombre d'au moins un, et **en ce que** pour le réglage du positionnement de la partie latérale (22R, 22L) respective, l'actionneur (25) est activé en fonction de la valeur de consigne et du poids partiel de la partie latérale (22R, 22L) respective, de sorte que la partie latérale (22R, 22L) respective est déposée au sol (10) avec sa part de poids partiel correspondante.

6. Procédé selon une des revendications 1 à 5, **caractérisé en ce qu'**en mode de fonctionnement « présélection de hauteur de coupe », un angle d'inclinaison (19) est préréglé entre la structure de fixation (3) et la moissonneuse-batteuse (1), aux fins de prédéfinir une valeur de consigne de hauteur de coupe, et **en ce que** pour le positionnement de la partie latérale (22R, 22L) respective, on détecte si au moins un des capteurs (13) de la partie latérale (22R, 22L) respective présente ou détecte un contact avec le sol (10) lorsque la valeur de consigne de hauteur de coupe est réglée.

7. Procédé selon la revendication 6, **caractérisé en ce qu'**en cas de détection indiquant que tous les capteurs (13) sont hors de contact avec le sol (10), la partie latérale (22R, 22L) respective est amenée, par activation de l'actionneur (25) respectif, dans une position médiane dans laquelle la partie latérale (22R, 22L) respective est positionnée de manière sensiblement alignée avec la partie médiane (21).

8. Procédé selon la revendication 6, **caractérisé en ce qu'**en cas de détection indiquant qu'au moins un des capteurs (13) présente ou détecte un contact avec le sol (10), le positionnement de la partie latérale (22R, 22L) respective est réalisé en fonction du mode de fonctionnement « réglage de hauteur de coupe ».

9. Procédé selon une des revendications 1 à 8, **caractérisé en ce qu'**en service sans sélection d'un mode de fonctionnement, le positionnement de la partie latérale (22R, 22L) respective est réalisé en fonction du mode de fonctionnement « présélection de hauteur de coupe ».

10. Procédé selon une des revendications précédentes, **caractérisé en ce que** pour déterminer la position d'une partie latérale (22R, 22L) respective par rapport à la partie médiane (21), on détermine la différence d'une distance (A1R, A1L) par rapport au sol (10), détectée par au moins un capteur (13) à l'extrémité extérieure de la partie latérale (22R, 22L), et d'une distance (A2R, A2L) par rapport au sol (10), détectée dans la région de l'axe de pivotement (24), par au moins un capteur (13).

11. Procédé selon la revendication 10, **caractérisé en ce que** dans la région de l'axe de pivotement (24), des signaux de mesure, respectivement d'un capteur (13) disposé sur la partie médiane (21) et sur la partie latérale (22R, 22L), à proximité de l'axe de pivotement (24), sont évalués aux fins de déterminer la distance (A2R, A2L) par rapport au sol (10).

12. Moissonneuse-batteuse (1) automotrice comprenant une tête de récolte (2) segmentée, notamment un tablier de coupe à tapis (20), et un dispositif de commande (17) qui est conçu pour la mise en œuvre du procédé selon une des revendications précédentes.

13. Moissonneuse-batteuse (1) automotrice selon la revendication 12, **caractérisée en ce que** pour la détection d'une distance (A1R, A1L, A2R, A2L) par rapport au sol (10), il est prévu sur la face inférieure de la tête de récolte (2), des capteurs (13) qui sont réalisés sous forme d'étriers palpeurs (14.1 à 14.8).

14. Moissonneuse-batteuse (1) automotrice selon la revendication 12, **caractérisée en ce que** des bras supports (27) sont disposés sur la partie médiane (21) et les parties latérales (22R, 22L), avec possibilité de pivotement autour d'un axe s'étendant dans la direction transversale, et portent une barre porte-lames (26), sachant que deux capteurs (13) sont respectivement prévus pour la détection d'une déviation verticale des bras supports (27) de la partie médiane (21) et des parties latérales (22R, 22L), les deux capteurs (13) de la partie médiane (21) étant réalisés chacun comme arbre de mesure (29a, 29b) relié de manière solidaire en rotation à au moins un des bras supports (27) de la partie médiane (21), et les deux capteurs (13) des parties latérales (22R, 22L) étant réalisés chacun comme arbre de mesure (31a, 31b, 32a, 32b) relié de manière solidaire en rotation à au moins deux bras supports (27) de la partie latérale (22R, 22L) respective et un potentiomètre (30) associé à l'arbre de mesure (29a, 29b, 31a, 31b, 32a, 32b) respectif.

**Fig. 1**

EP 4 162 789 B1

Fig. 2

**Fig. 3**

EP 4 162 789 B1

**IN DER BESCHREIBUNG AUFGEFÜHRTE DOKUMENTE**

**In der Beschreibung aufgeführte Patentdokumente**

- WO 2020185873 A1
- US 2021185917 A1